# EUROPEAN PATENT SPECIFICATION

(11) **EP 2 807 354 B1**
(45) Date of publication and mention of the grant of the patent: **07.03.2018**
(21) Application number: 13740893.6
(22) Date of filing: 25.01.2013
(51) Int. Cl.: F01N 13/04, F01N 3/00, F01N 3/20, F01N 3/08, F01N 3/10, F01N 3/28, F01N 9/00, F01N 13/00, F01N 3/021, F01N 1/00, F01N 3/031, F01N 3/033

(54) **AN EXHAUST GAS PURIFYING SYSTEM AND A DEVICE THEREIN**
ABGASREINIGUNGSSYSTEM UND VORRICHTUNG DARIN
SYSTÈME DE PURIFICATION DES GAZ D'ÉCHAPPEMENT ET DISPOSITIF INTERNE

(30) Priority: 27.01.2012 SE 1250058
(43) Date of publication of application: 03.12.2014
(73) Proprietor: D.E.C. Marine AB, 421 22 Västra Frölunda (SE)
(72) Inventor: HOLMSTRÖM, Per, S-426 79 Västra Frölunda (SE)
(74) Representative: Valea AB
(86) International application number: PCT/SE2013/050055
(87) International publication number: WO 2013/112101

(56) References cited:
- EP-A1- 1 837 490
- EP-A1- 2 110 528
- EP-A1- 2 332 826
- EP-A2- 0 411 445
- EP-A2- 1 013 902
- WO-A1-95/30823
- FR-A1- 2 801 070
- JP-A- S58 162 711
- JP-A- 2002 242 659
- JP-A- 2010 069 999
- US-A- 4 558 565
- US-A1- 2006 117 742
- US-A1- 2008 178 576

## Description

### TECHNICAL FIELD

The present disclosure relates to an exhaust gas purifying device, in particular for use in a marine vessel. The disclosure also relates to an exhaust gas purifying system comprising the exhaust gas purifying device

### TECHNICAL BACKGROUND OF THE INVENTION

Marine vessels, i.e. ships, normally utilize combustion engines such as diesel engines for their performances.

To such an engine there is connected an exhaust gas system for discharging exhaust gas that is emitted into the atmosphere as a result of the combustion in the engine. In the exhaust gas system there is normally provided an exhaust gas purifying system comprising purifying elements such as catalytic elements for reducing nitrogen oxide. At least one nitrogen oxide reducing element is typically a SCR (selective catalytic reduction) converter element for the catalytic conversion of nitrogen oxides with a reducing agent, such as, for example, a hydrocarbon or a urea and water solution.

The exhaust gas purifying system is connected to an exhaust gas line of the combustion engine. Furthermore, there may be arranged a bypass line which branches off from the exhaust gas line upstream of the exhaust gas purifying system and rejoins the exhaust gas line at an entry point that is located downstream of the exhaust gas purifying system. By bypassing the exhaust gas it is possible to influence the temperature of the exhaust gas purifying system and to influence the quantitative flow of exhaust gas through the exhaust gas purifying system in a manner, such that the catalytic element, for example, is not overloaded. A sound absorber is normally arranged downstream of the gas purifying system and, if present, the bypass line. A supply of a reducing agent such as urea water is provided upstream of an SCR converter element.

A known exhaust gas system of the above-mentioned type with a gas purifying system and a bypass line is disclosed in EP 2 332 826 A1, wherein automatic marine vessel position detection means utilizing a global positioning system (GPS) is used for selecting the purifying state of the exhaust gas that corresponds to a restriction in a sea area, in which the emission of a harmful component is restricted, i.e. emission control areas. Also disclosed therein is a SCR converter using urea water and how the urea water is supplied to the exhaust gas purifying system via a spray port that is arranged upstream of the SCR converter. Exhaust gas systems using bypass for aftertreatment devices may be found in EP1837490A1, EP0411445A2, JP2002242659A, JP2010069999A, US2008/178576A1, JPS58162711A, US4558565A, WO95/30823A1. Although the prior art exhaust gas systems for a vehicle, such as a vessel, to some extent may alleviate the problems of providing a system containing a gas purifying system that may be selectably bypassed there is still a great need for further improvements of the exhaust gas purifying systems, so as to provide a system which is easy to use and install in the marine vessel.

### SUMMARY

In view of known exhaust gas purifying systems there is an object to provide an improved and/or alternative exhaust gas purifying system having a catalyst and a bypass function which are easy to use and install in the marine vessel.

The object is wholly or partially achieved by an exhaust gas purifying device according to appended claim 1 and an exhaust gas purifying system according to claim 10. Embodiments are set forth in the appended dependent claims, in the following description and in the drawings.

According to one aspect, there is provided an exhaust gas purifying device comprising a purifying unit having a casing and a first exhaust gas passage arranged inside the casing. The first exhaust gas passage comprises one or more exhaust gas purifying elements.

Furthermore, the purifying unit comprises a second exhaust gas passage that is arranged as an integrated part of the purifying unit within a cavity thereof. A passage joining part is also arranged as an integrated part of the purifying unit, in which passage joining part the first and second exhaust gas passages are merged in a common passage for providing a common exhaust gas outlet of the purifying device.

The cavity may be open, e.g. a recess in the outer surface of the casing providing an open cavity.

An "exhaust gas purifying element" may be any element lowering the amount of a substance, particulate matter and/or soot in an exhaust gas, when the exhaust gas is passing through the exhaust gas purifying element. In particular, the exhaust gas purifying element may be a catalytic converter, such as a reduction catalyst and an oxidation catalyst, and/or a diesel particulate filter (DPF). A diesel particulate filter (DPF) is a device designed to remove diesel particulate matter or soot from the exhaust gas of a diesel engine. An example of a catalytic converter is a nitrogen oxide reducing element such as a SCR (selective catalytic reduction) element as described herein.

As the exhaust gas purifying device may comprise one or more exhaust gas purifying elements, it is possible to include different types of purifying elements in the device as well as more than one of the same type of element in the device. Furthermore, the second exhaust gas passage may or may not include one or more the mentioned exhaust gas purifying elements.

An exhaust gas purifying device is normally arranged within a duct extending from an engine room to a funnel. The duct is normally vertically or horizontally arranged in the marine vessel. In many cases there is a limited space in which an exhaust gas purifying device may be installed. By the arrangement of the exhaust gas purifying device according to the invention, there is provided a possibility of a compact installation of the exhaust gas purifying device with a bypass function in a vessel without the need for sacrificing further valuable space aboard the vessel. The device is also suited for post-installation in older vessels, since there is provided a possibility of an installation that does not intrude upon original functions of the vessel. Furthermore, the installation is very easy to install with only few connections to be made.

The second exhaust gas passage is arranged within a cavity that is at least partly formed by the casing. The cavity may be separated from the first exhaust gas passage by a partitioning member.

By this arrangement of the cavity, there is provided a possibility of compact installation of the exhaust gas purifying device with a bypass function in a vessel, while it provides a way of separating and isolating the second exhaust gas passage from its surrounding. It is thereby possible to avoid any disturbances due to temperature changes caused by, for example, the exhaust gas flowing through the second exhaust gas passage.

The portioning member may be arranged as an L-shaped partitioning member, the L-shaped form as seen from the cross-section taken along a line A-A.

The cavity is formed as a recess of an externally limiting surface of the purifying unit.

According to an embodiment, the cavity may be formed along a longitudinal edge portion of the casing between two adjacent walls of the casing and wherein the partitioning member is arranged along the edge portion and separates the cavity from the first exhaust gas passage.

The longitudinal edge portion is extending substantially in the same direction as a longitudinal line L. This arrangement provides a compact exhaust gas purifying device as well as a possibility of separating and isolating the second exhaust gas passage from the surroundings.

According to an embodiment, the passage joining part may be arranged inside the casing.

This arrangement further provides the advantages of the compactness of the exhaust gas purifying device, which is very easy to install with only few connections to be made in an exhaust gas purifying system.

The second gas passage is provided inside a separate gas line that is arranged within the cavity.

By the separate gas line arranged within the cavity, there the second exhaust gas passage is further separated and isolated from its surroundings.

The gas line may be tubular.

According to an embodiment, the gas line may be movably attached to the purifying unit inside the cavity.

The arrangement of movably attaching the purifying unit inside the cavity prevents any vibrations or disturbances in the exhaust gas purifying device due to, for example, movements of the gas line following temperature changes.

The gas line may at least be axially movably arranged in the cavity.

The first and second exhaust gas passages each has a gas inlet arranged at a first end portion of the purifying unit and wherein each passage may extend from the gas inlet towards the passage joining part close to a second end portion of the purifying unit.

This arrangement provides a way of providing the mentioned compactness and functionalities of the exhaust gas purifying device. The first and second end portions may be arranged on opposite ends/sides of the casing.

Each exhaust gas passage may longitudinally extend substantially in the same direction as a longitudinal line L from the gas inlet towards the passage joining part.

According to an embodiment, at least a portion of a side wall that has a surface facing the first exhaust gas passage may be provided with a hatch that is openable for service and inspection of the first exhaust gas passage and the purifying elements therein.

According to an embodiment, the second exhaust gas passage may not contain any purifying element.

In this way the second exhaust gas passage may purely act as a bypass passage through which exhaust gas may be flowing instead of through the first exhaust gas passage, when so is necessary, as described herein below.

According to an embodiment, a sound absorber may be arranged inside the casing as part of or in connection to the passage joining part.

The sound absorber may be arrange so that any exhaust gas flow from the first and second exhaust gas passages are directed through the sound absorber and finally towards and through the common exhaust gas outlet.

By integrally arranging the sound absorber within the exhaust gas purifying device and as part of or in connection with the passage joining part, it is provided a compact, easy-installed and functional exhaust gas purifying device.

According to another aspect there is provided an exhaust gas purifying system comprising the exhaust gas purifying device as described above. The system further comprises a flow passage switching device having a gas inlet for connection to a combustion engine via an exhaust gas line. The flow passage switching device further comprises a first gas outlet for connection to an inlet of the first exhaust gas passage, a second gas outlet for connection to an inlet of the second exhaust gas passage and flow passage switching means for opening and closing of the first and second gas outlets such that the first gas outlet is open when the second gas outlet is closed or the second gas outlet is open when the first gas outlet is closed.

The system provides a way, wherein the purifying state of the exhaust gas purifying device and/or the control of factors, such as the temperature within the exhaust gas purifying system and the quantitative flow of exhaust gas through the exhaust gas purifying device, may be regulated in a manner, such that a catalytic element, for example, is not overloaded. Another example is mentioned herein below, wherein a use of the bypass passage is depending on whether or not the marine vessel carrying the exhaust gas purifying system is located within an emission control area.

According to an embodiment, the system may further comprise a control unit for automatic or manual regulation of the exhaust gas purifying system.

Thus, the control unit may be arranged to automatically control different devices in view of predetermined rules and parameters. For example, the flow gas passage switching device may in combination with opening or closing of a spray port for urea water, which is required during gas purification of a SCR element, be automatically controlled via the control unit, e.g. when entering or leaving an emission control area as described herein below. The spraying of the urea is automatically activated following an automatically controlled opening of the first exhaust gas passage, thereby allowing an exhaust gas to flow through the first passage and the SCR element, and a heating of the SCR element to a temperature required for its catalytic function.

The control unit may determine its regulation on a signal from a sensor or the like as, for example, disclosed herein.

According to an embodiment, the system may be arranged so that when the control unit determines that the exhaust purifying system is within an emission control area based on a signal for determining whether or not the system is within the emission control area, the flow passage switching means is driven so that the first gas outlet is opened and the second gas outlet is closed, and when the control unit determines that the exhaust purifying system is not within an emission control area, the flow passage switching means is driven so that the first gas outlet is closed and the second gas outlet is opened.

The invention will now be described in more detail with reference to embodiments and figures.

### BRIEF DESCRIPTION OF THE DRAWINGS

Figure 1 schematically illustrates an exhaust gas system connected to an engine.
Figure 2 shows a perspective view of an embodiment of exhaust gas purifying device.
Figure 3 shows a schematic cross-sectional side view of an example of flow passage switching device.
Figure 4 shows a schematic cross-sectional side view of an example of flow passage switching device.

### DETAILED DESCRIPTION OF EMBODIMENTS

The present disclosure relates to an exhaust gas purifying system for use with a combustion engine (diesel) in a marine vessel. In the following, embodiments of such exhaust gas purifying system and exhaust gas purifying devices therein will be further illustrated.

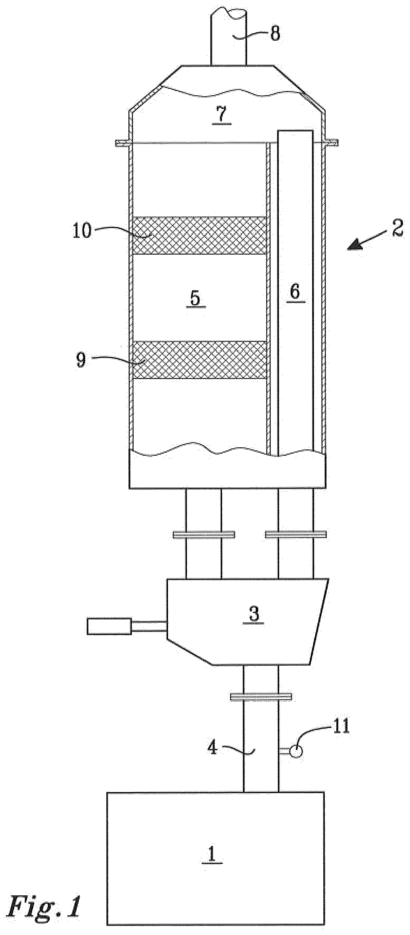

Figure 1 schematically illustrates a diesel engine 1 connected to an exhaust gas system containing an exhaust gas purifying system, which in turn comprises an exhaust gas purifying device 2 and a flow passage switching device 3, to which the gas flow from the engine via an exhaust gas line 4 flow. The flow passage switching device 3 may contain one or more valve or damper units that may be switched between a position (-s) allowing the flow of gas through a first exhaust gas passage 5 of the exhaust gas purifying device 2 and a position (-s) allowing the flow of gas through a second exhaust gas passage 6. The first and second exhaust gas passages 5, 6 rejoin downstream thereof in a passage joining part 7 of the exhaust purifying device 2. The passage joining part 7 provides a common exhaust gas outlet 8 for connection to an exhaust gas discharging line. This arrangement provides, for example, an easy installation in an exhaust gas system and minimizes the space required for installation of the exhaust gas purifying device 2 and system.

A sound absorber (not shown) may also be arranged downstream of the common exhaust gas outlet 8, either between the outlet 8 and the exhaust gas discharging line or along the discharging line (not shown). Any sound absorber known to the skilled person, and which is suitable for use in the marine exhaust gas system and in connection to the exhaust gas discharging line, may be used.

Alternatively, the sound absorber may be integrally arranged within the exhaust gas purifying device 2 (not shown), and the skilled person will appreciate how this may be integrally arranged as part of or in connection with the passage joining part 7.

The first passage comprises one, two or more purifying elements 9, 10 for purification of the exhaust gas. Figure 1 illustrates an embodiment with two purifying elements 9, 10. A purifying element 9, 10 may be a catalytic element for reducing nitrogen oxides, such as a SCR converter element (-s) for the catalytic conversion of nitrogen oxides with a reducing agent, such as, for example, ammonia, a hydrocarbon or normally a urea and water solution, i.e. urea water. The urea water may be added into the exhaust gas line 4 located upstream of the flow passage switching device 3 via a controlled spray port 11 through which the urea water is jetted, when an exhaust gas is flowing through the first exhaust gas passage 5 and a SCR converter element 9, 10 has been heated to a temperature for a working catalytic function. The urea water is hydrolyzed by the heat of the exhaust gas to produce ammonia that acts as a reducing agent in the SCR converter element 9, 10 to decompose nitrogen oxides into nitrogen and water. An ammonia slip catalyst element may additionally be arranged after the SCR converter element (-s) to further reduce any remaining ammonia in the exhaust gas flowing from the SCR converter element (-s).

One or more alternative and/or additional purifying elements may also be arranged in the first exhaust channel and may be any element lowering the amount of a substance, particulate matter and/or soot in an exhaust gas, when the exhaust gas is passing through the exhaust gas purifying element. In particular, the exhaust gas purifying element may be a catalytic converter, such as a reduction catalyst and an oxidation catalyst, and/or a diesel particulate filter (DPF), A diesel particulate filter (DPF) is a device designed to remove diesel particulate matter or soot from the exhaust gas of a diesel engine. An example of a catalytic converter is the mentioned SCR (selective catalytic reduction) element as described herein above.

The second exhaust gas passage 6 is provided as a bypass passage 6 for passing an exhaust gas flow around the first exhaust gas passage 5 and the purifying element (-s) 9, 10. Thus, the second exhaust gas passage 6 is designed as an empty passage 6, in the figure shown as a tubular bypass line, wherein the purifying state of the exhaust gas purifying device and/or the control of factors such as the temperature within the exhaust gas purifying system and the quantitative flow of exhaust gas through the exhaust gas purifying device 2 may be regulated in a manner, such that a catalytic element, for example, is not overloaded.

A control unit (not shown) may be arranged for detecting the status of the engine 1 and/or the exhaust purifying system and the regulation thereof as is appreciated by the skilled person in the art. The control unit may be connected to a temperature sensor arranged in the exhaust gas purifying device 2, to a load detecting unit for detecting a load of the engine 1 from which the exhaust gas is emitted, to a position detecting unit for detecting the position of the valve or damper unit of the flow passage switching device 3 and to an operation state detecting unit for detecting an operating state of devices or units required for purification of the exhaust gas, such as the controlled spray port 11 for urea water that is required during exhaust gas purification of a heated SCR element. The control unit may be arranged to automatically control different devices in view of predetermined rules and parameters as is appreciated by the skilled person in the art. The control unit and the devices regulated there through may also be manually controlled via a control panel.

Furthermore, todays marine vessels are normally provided with means for detecting the position of the marine vessels, such as means utilizing global navigation satellite system, e.g. Global Positioning System (GPS). Thus, combined with the use of, for example a nautical (marine) chart the detected position may be used for navigating the vessel.

In certain designated sea areas, so called emission control areas, the emission of one or more harmful components such as nitrogen oxide is restricted. Thus, by utilizing the means for detecting the position of the marine vessel and comparing the detected position with, for example, a marine chart or a file of marine chart coordinates containing the information about emission control areas it may be determined whether or not the marine vessel is in an emission control area. This information may in turn be used to regulate the purifying state of the exhaust gas purifying system via the control unit and devices in the system, such as the flow passage switching device 3. The skilled person appreciate that the position detection, the determination of whether or not the marine vessel is within a emission control area and regulation of device thereinafter may be fully automatized by use of suitable means therefor, such as the control unit. For example, based on an automatically detected position and determination that the marine vessel is leaving a sea area outside an emission control area and entering the latter, the control unit automatically provides a signal so that the flow passage switching device and its valve unit (-s) is driven to close the second exhaust gas passage 6 and open the first exhaust gas passage 5. When the marine vessel is leaving the emission control area, the flow passage switching device will automatically be regulated to be driven in a reverse manner.

Thus, the control of the purifying system and other devices may be complex. For example, when the control unit determines that temperature of a SCR converter element 9, 10 is a predetermined temperature or more based on a signal from the temperature sensor, that the load of the engine 1 is a predetermined load or more based on a signal from the load detecting portion, that switching device 3 allows the flow of gas through the first exhaust gas passage 5 based on a signal from the switching device's position detecting unit and that the devices are operated based on a signal from the operation state detecting portion, wherein the control unit have urea jetted into the exhaust gas line 4 via a controlled spray port 11, when an exhaust gas is flowing through the first exhaust gas passage 5 and a SCR converter element has been heated to a temperature for a working catalytic function. All this may be automatically controlled via the control unit.

According to other embodiments, one or more purifying elements may be arranged in the second exhaust gas passage 6 (not shown). This provides a possibility of, for example, selecting a purifying state as required by regulatory restrictions in a sea area.

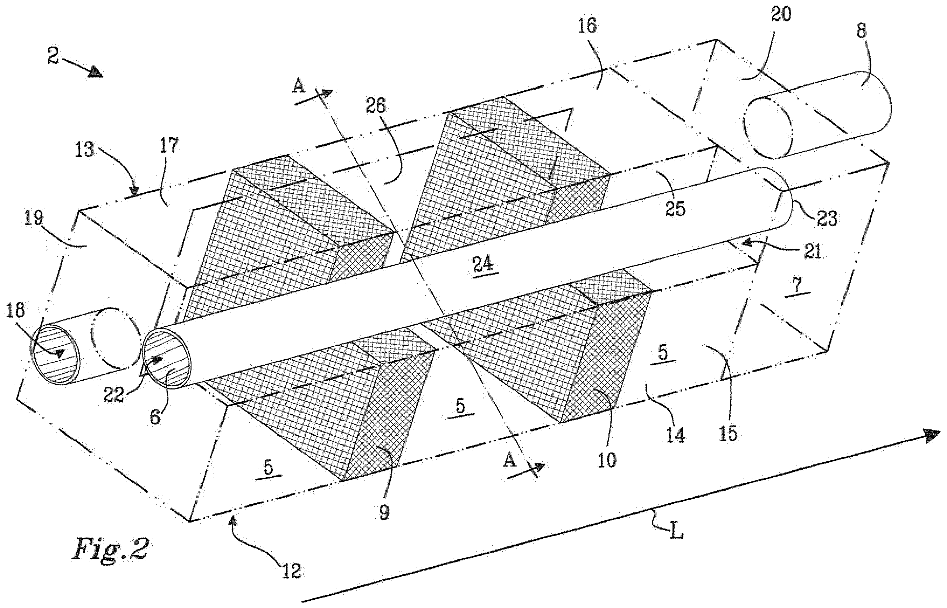

Figure 2 illustrates one embodiment of the exhaust gas purifying device of the type shown in figure 1. The exhaust gas purifying device comprises purifying unit 12 (e.g. catalyzer unit) having a casing 13 which longitudinally extends generally in the same direction as a longitudinal line (L) and has a substantially rectangular transverse cross-section taken along the line A-A, the cross section having a main plane that is substantially parallel to a plane that extends in directions that are perpendicular to the longitudinal line (L). The casing comprises four side walls 14, 15, 16, 17 extending in the longitudinal direction. The first exhaust gas passage 5 is arranged inside the casing, wherein the side walls at least in part define that passage. The first exhaust gas passage 5 extends in the in the same direction as the longitudinal line (L) from a first exhaust gas inlet 18 arranged at a first end portion 19 of the purifying unit 12 to the passage joining part 7 arranged close to a second end portion 20 of the purifying unit 12.

The second exhaust gas passage 6 is arranged in a cavity 21 of the casing 13 and extends from a second exhaust gas inlet 22 arranged close to the first end portion 19 to an opening 23 into the passage joining part 7. The first and second exhaust gas passages 5, 6 have substantially the same lengths and extend substantially in raw and parallel with each other. As shown in figure 2, the second exhaust gas passage 6 is forming part of a longitudinal extending tube 24 forming a gas line 24 that is arranged within the cavity 21, thereby forming an integrated part of the purifying unit 12, the casing 13 and the exhaust gas purifying device 2. The shown cavity 21 is formed as an outwardly open recess along a longitudinal edge portion of the casing 13 between the side wall 16 and the side wall 15. An L-shaped partitioning member 25 (L-shaped as seen from the cross-section taken along the line A-A as mentioned above) is arranged along the edge portion and separates the recess from the first exhaust gas passage 5 inside the casing 13. The first and second exhaust gas inlets 18, 22 are arranged for connection to corresponding outlets of the flow passage switching device 3. The passage joining part comprises an exhaust gas outlet 8 at the second end portion 20 of the purifying unit 12 for connection to the discharge exhaust gas line and/or sound absorber.

As described above, the first passage may comprise one, two or more purifying elements 9, 10 for purification of the exhaust gas. Figure 2 illustrates the embodiment with two purifying elements 9, 10.

In another embodiment (not shown), the purifying unit 12 has the cavity arranged in the form of a longitudinal passage arranged within the purifying unit 12, and in particular inside a casing 13 thereof, along and inside which the second exhaust gas passage 6 is arranged. The second exhaust gas passage 6 may extend through the longitudinal passage in a direction that is substantially the same as the longitudinal line (L). For better understanding of the embodiment, the embodiment has been described using the references in figures 1 and 2.

In all embodiments, the second exhaust gas passage 6 may be provided inside a separate gas line 24 that is arranged within the cavity 21 as shown in figure 2. The gas line may be movably arranged in the cavity 21 and movably attached to the purifying unit 12, e.g. by being attached to the cavity 13 by means of two or more attachment rings (not shown) or the like provided with vibration dampening elements (not shown).

Furthermore, at the second exhaust gas passage 6 inlet 22, the gas line 24 may be provided with an expansion element such as an expansion bellow member (not shown). The vibrating dampening elements and the expansion bellow member provides a possibility of preventing any disturbances in the device due to movements of the gas line 24 and the second exhaust gas passage 6 following, for example, temperature changes.

As shown in figure 2, a portion of a side wall 17 that has surface facing the first exhaust gas passage 5 may be provided with a hatch 26 that is openable for service and inspection performed within the passage 5. The purifying elements 9, 10 may be detached and taken outside via the hatch 26 opening.

As mentioned above, the sound absorber may be integrally arranged within the exhaust gas purifying device 2 (not shown), and the skilled person will appreciate how this may be integrally arranged as part of or in connection with the passage joining part 7. The sound absorber is then arranged inside the casing as part of or in connection to the passage joining part 7, and arranged so that any exhaust gas flow from the first and second exhaust gas passages 5, 6 are directed through the sound absorber and finally towards and through the common exhaust gas outlet 8.

The passage joining part 7 of the casing may adopt substantially the rectangular transverse cross-section as is illustrated in figure 2. It may also be tapering formed towards the second end side as is shown in figure 1.

According other embodiments, the exhaust gas purifying device 2 may have other forms than the ones described above with rectangular cross-sections. For example, the exhaust gas purifying device 2 may adopt a substantially circular cylinder form. The exhaust gas passages 5, 6 will then longitudinally extend in directions that are substantially the same as the extension of a longitudinal axis of the cylinder.

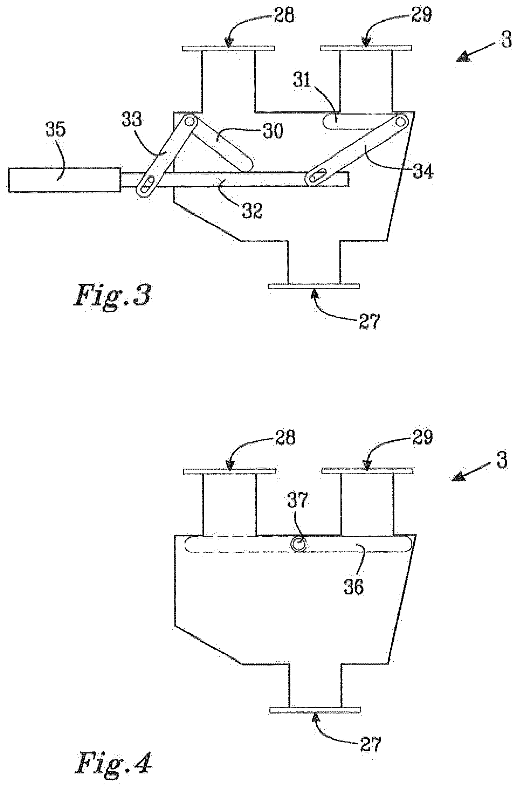

Figures 3 and 4 illustrate two examples of the flow passage switching device 3 for use in an exhaust gas purifying system according to the present disclosure. Nevertheless, any flow passage switching device 3 known to the skilled person, and which is suitable for use in the marine exhaust gas system and in connection to the exhaust gas purifying device and that may be used to open and close the first and second exhaust gas passages 5, 6, may be used.

As illustrated in figures 3 and 4, the flow switching device 3 has a housing, a gas inlet 27 for connection to the combustion engine 1 via the exhaust gas line 4 (see figures 1 to 3), and the flow passage switching device 3 may further comprise a first gas outlet 28 for connection to the inlet 18 of the first exhaust gas passage 5, a second gas outlet 29 for connection to the inlet 22 of the second exhaust gas passage 6 (see figures 1 to 3). Furthermore, there may be provided flow passage switching means inside the housing for opening and closing of the first and second gas outlets 28, 30 such that the first gas outlet 28 is open when the second gas outlet 29 is closed or the second gas outlet 30 is open when the first gas outlet 28 is closed.

In the embodiment of figure 3, the flow passage switching device 3 comprises the gas inlet 27 for connection to the exhaust gas line 4, and two gas outlets 28, 29. Two tabular valves 30, 31 are arranged for closing and opening of the outlets via a rod arrangement 32, 33, 34, whereby one outlet 28, 29 is closed when the other one 28, 29 is open. The driving of the rod and valve arrangement may, for example, be by a motor or a hydraulic arrangement, e.g. via a fluid type actuator 35 that may be arranged so that when a pressure of a fluid supplied to the actuator 35 is reduced to a predetermined value or less, the second gas outlet 29 is opened and the first gas outlet 28 is closed

In the embodiment of figure 4, the flow passage switching device 3 comprises one tabular valve unit 36 that is arranged to pivotally rotate around a support axis 37 positioned in one end portion thereof between a closing position of one gas outlet 28, 29 and the other outlet 28, 29. The valve unit 36 may be rotated by an actuator such as a motor, fluid type actuator or the like (not shown).

The regulation of the closing and opening of the gas outlets 28, 29 of the flow passage switching device 3 has been described above and can, for example, be automatically regulated being based on whether or not the marine vessel is located in an emission control area.

According to one embodiment, the flow passage switching device 3 is an integrated part of the exhaust gas purifying device 2, e.g. by having the casing 13 of the exhaust gas purifying device 2 also forming the housing of the flow passage switching device 3.

This provides a compact exhaust gas purifying device 2 that is easy to install, while having the functionality of manually or automatically switching between the use of a bypass passage 6 and the use of a passage 5 including exhaust gas purifying elements 9, 10.

As the skilled person will appreciate, many embodiments and alternatives are possible within the scope of the present invention. For example, the exhaust gas purifying device may have a tubular formed casing inside which the first exhaust channel is provided and the casing being provided with a cavity for the second exhaust gas passage 6 and the passage joining part arranged inside the casing. Furthermore, the exhaust gas purifying device may be covered by thermal isolation for providing a fireproof device, for example.

## Claims

1. An exhaust gas purifying device (2) comprising a purifying unit (12) having a casing (13) and a first exhaust gas passage (5) arranged inside the casing (13), wherein the first exhaust gas passage (5) comprises one or more exhaust gas purifying elements (9, 10), a second exhaust gas passage (6) is arranged as an integrated part of the purifying unit (12) within a cavity (21) thereof, and wherein a passage joining part (7) is arranged as an integrated part of the purifying unit (12), in which passage joining part (7) the first and second exhaust gas passages (5, 6) are merged in a common passage for providing a common exhaust gas outlet (8) of the purifying device (2), wherein said second exhaust gas passage (6) is arranged within the cavity (21) that is at least partly formed by the casing (13), said cavity (21) is separated from the first exhaust gas passage (5) by a partitioning member (25) and formed as a recess of an externally limiting surface of the purifying unit (12), wherein the first and second exhaust gas passages (5, 6) each has a gas inlet (18, 22) arranged at a first end portion (19) of the purifying unit (12) and wherein each exhaust gas passage (5, 6) extends from the gas inlet (18, 22) towards the passage joining part (7) close to a second end portion (20) of the purifying unit (12), said each gas inlet (18, 22) being arranged for connection to respective first and second gas outlet (28, 29) of a flow passage switching device (3) having a gas inlet (27) for connection to a combustion engine (1) via an exhaust gas line (4), the flow passage switching device (3) further comprising flow passage switching means (30, 31, 32, 33, 34, 35, 36, 37) for opening and closing of the first and second gas outlets (28, 29) such that the first gas outlet (28) is open when the second gas outlet (29) is closed or the second gas outlet (29) is open when the first gas outlet (28) is closed, said second exhaust gas passage (6) is provided inside a separate gas line (24), **characterized in that** said gas line (24) is movably attached to the purifying unit (12) within an open cavity (21) formed by a recess in the outer surface of the casing (13), separating and isolating said exhaust gas passage (6) from its surroundings.

2. The exhaust gas purifying device according to claim 1, wherein the cavity (21) is formed along a longitudinal edge portion of the casing (13) between two adjacent walls (15, 16) of the casing (13) and wherein the partitioning member (25) is arranged along the edge portion and separates the cavity (21) from the first exhaust gas passage (5).

3. The exhaust gas purifying device according to claim 1 or 2, wherein the passage joining part (7) is arranged inside the casing (13).

4. The exhaust gas purifying device according to any one the preceding claims, wherein the gas line (24) is tubular.

5. The exhaust gas purifying device according to any one the preceding claims, wherein each exhaust gas passage (5, 6) longitudinally extends substantially in the same direction as a longitudinal line (L) from the gas inlet (18, 22) towards the passage joining part (7).

6. The exhaust gas purifying device according to any one of the preceding claims, wherein at least a portion of a side wall (17) that has a surface facing the first exhaust gas passage (5) is provided with a hatch (26) that is openable for service and inspection of the first exhaust gas passage (5) and the purifying elements (9, 10) therein.

7. The exhaust gas purifying device according to any one of the preceding claims, wherein the second exhaust gas passage (6) does not contain any purifying element (9, 10).

8. The exhaust gas purifying device according to any one of the preceding claims, wherein a sound absorber is arranged inside the casing (13) as part of or in connection to the passage joining part (7).

9. The exhaust gas purifying system according to any one of claims 1-8, wherein the system further comprises a control unit for automatic or manual regulation of the exhaust gas purifying system.

10. The exhaust gas purifying system according to claim 9, wherein the system is arranged so that:
- when the control unit determines that the exhaust purifying system is within an emission control area based on a signal for determining whether or not the system is within the emission control area, the flow passage switching means (30, 31, 32, 33, 34, 35, 36, 37) is driven so that the first gas outlet (28) is opened and the second gas outlet (29) is closed and
- when the control unit determines that the exhaust purifying system is not within an emission control area, the flow passage switching means (30, 31, 32, 33, 34, 35, 36, 37) is driven so that the first gas outlet (28) is closed and the second gas outlet (29) is opened.

## Patentansprüche

1. Abgasreinigungsvorrichtung (2), umfassend eine Reinigungseinheit (12), die ein Gehäuse (13) und einen in dem Gehäuse (13) angeordneten ersten Abgaskanal (5) aufweist, wobei der erste Abgaskanal (5) ein oder mehrere Abgasreinigungselemente (9, 10) umfasst, wobei ein zweiter Abgaskanal (6) als integrierter Teil der Reinigungseinheit (12) in einem Hohlraum (21) davon angeordnet ist, und wobei ein Kanalverbindungsteil (7) als integrierter Teil der Reinigungseinheit (12) angeordnet ist, in welchem Kanalverbindungsteil (7) der erste und der zweite Abgaskanal (5, 6) in einem gemeinsamen Kanal zusammenkommen, um einen gemeinsamen Abgasauslass (8) der Reinigungsvorrichtung (2) bereitzustellen, wobei der zweite Abgaskanal (6) innerhalb des Hohlraums (21) angeordnet ist, der mindestens teilweise von dem Gehäuse (13) gebildet wird, wobei der Hohlraum (21) durch ein Trennelement (25) von dem ersten Abgaskanal (5) getrennt ist und als Ausnehmung einer äußeren Begrenzungsfläche der Reinigungseinheit (12) ausgebildet ist, wobei der erste und der zweite Abgaskanal (5, 6) jeder einen Gaseinlass (18, 22) aufweisen, der an einem ersten Endabschnitt (19) der Reinigungseinheit (12) angeordnet ist, und wobei sich jeder Abgaskanal (5, 6) von dem Gaseinlass (18, 22) zu dem Kanalverbindungsteil (7) nahe einem zweiten Endabschnitt (20) der Reinigungseinheit (12) erstreckt, wobei besagter jeder Gaseinlass (18, 22) zum Anschluss an den ersten beziehungsweise den zweiten Gasauslass (28, 29) einer Strömungskanalumschaltvorrichtung (3) eingerichtet ist, die einen Gaseinlass (27) zum Anschluss, mittels einer Abgasleitung (4), an einen Verbrennungsmotor (1) aufweist, wobei die Strömungskanalumschaltvorrichtung (3) weiter Strömungskanalumschaltmittel (30, 31, 32, 33, 34, 35, 36, 37) zum Öffnen und Schließen des ersten und des zweiten Gasauslasses (28, 29) umfasst, sodass der erste Gasauslass (28) offen ist, wenn der zweite Gasauslass (29) geschlossen ist, oder der zweite Gasauslass (29) offen ist, wenn der erste Gasauslass (28) geschlossen ist, wobei der zweite Abgaskanal (6) innerhalb einer getrennten Gasleitung (24) vorgesehen ist, **dadurch gekennzeichnet, dass** die Gasleitung (24) beweglich an der Reinigungseinheit (12) innerhalb eines durch eine Ausnehmung in der Außenfläche des Gehäuses (13) gebildeten offenen Hohlraums (21) befestigt ist, der den Abgaskanal (6) von seiner Umgebung trennt und isoliert.

2. Abgasreinigungsvorrichtung nach Anspruch 1, wobei der Hohlraum (21) entlang einem Längsrandabschnitt des Gehäuses (13) zwischen zwei benachbarten Wänden (15, 16) des Gehäuses (13) gebildet ist und wobei das Trennelement (25) entlang dem Randabschnitt angeordnet ist und den Hohlraum (21) von dem ersten Abgaskanal (5) trennt.

3. Abgasreinigungsvorrichtung nach Anspruch 1 oder 2, wobei das Kanalverbindungsteil (7) in dem Gehäuse (13) angeordnet ist.

4. Abgasreinigungsvorrichtung nach einem der vorhergehenden Ansprüche, wobei die Gasleitung (24) röhrenförmig ist.

5. Abgasreinigungsvorrichtung nach einem der vorhergehenden Ansprüche, wobei sich jeder Abgaskanal (5, 6) in Längsrichtung im Wesentlichen in derselben Richtung erstreckt wie eine längsgerichtete Linie (L) von dem Gaseinlass (18, 22) zu dem Kanalverbindungsteil (7).

6. Abgasreinigungsvorrichtung nach einem der vorhergehenden Ansprüche, wobei mindestens ein Teil einer Seitenwand (17), der eine Oberfläche aufweist, die dem ersten Abgaskanal (5) zugewandt ist, mit einer Luke (26) versehen ist, die zur Wartung und Inspektion des ersten Abgaskanals (5) und der darin befindlichen Reinigungselemente (9, 10) geöffnet werden kann.

7. Abgasreinigungsvorrichtung nach einem der vorhergehenden Ansprüche, wobei der zweite Abgaskanal (6) kein Reinigungselement (9, 10) enthält.

8. Abgasreinigungsvorrichtung nach einem der vorhergehenden Ansprüche, wobei ein Schalldämpfer in dem Gehäuse (13) als Teil von oder in Verbindung mit dem Kanalverbindungsteil (7) angeordnet ist.

9. Abgasreinigungssystem nach einem der Ansprüche 1-8, wobei das System weiter eine Steuereinheit zur automatischen oder manuellen Regulierung des Abgasreinigungssystems umfasst.

10. Abgasreinigungssystem nach Anspruch 9, wobei das System so eingerichtet ist, dass:
- wenn die Steuereinheit feststellt, dass sich das Abgasreinigungssystem innerhalb eines Emissionsüberwachungsgebiets befindet, auf Basis eines Signals zur Feststellung dessen, ob sich das System innerhalb des Emissionsüberwachungsgebiets befindet oder nicht, das Strömungskanalumschaltmittel (30, 31, 32, 33, 34, 35, 36, 37) so angetrieben wird, dass der erste Gasauslass (28) geöffnet wird und der zweite Gasauslass (29) geschlossen wird, und
- wenn die Steuereinheit feststellt, dass sich das Abgasreinigungssystem nicht innerhalb eines Emissionsüberwachungsgebiets befindet, das Strömungskanalumschaltmittel (30, 31, 32, 33, 34, 35, 36, 37) so angetrieben wird, dass der erste Gasauslass (28) geschlossen wird und der zweite Gasauslass (29) geöffnet wird.

## Revendications

1. Dispositif de purification de gaz d'échappement (2) comprenant une unité de purification (12) ayant une enveloppe (13) et un premier passage de gaz d'échappement (5) agencé à l'intérieur de l'enveloppe (13), dans lequel le premier passage de gaz d'échappement (5) comprend un ou plusieurs éléments de purification de gaz d'échappement (9, 10), un second passage de gaz d'échappement (6) est agencé en tant que partie intégrée de l'unité de purification (12) dans une cavité (21) de celle-ci et dans lequel une partie de jonction de passages (7) est agencée en tant que partie intégrée de l'unité de purification (12), dans laquelle partie de jonction de passages (7) le premier et le second passage de gaz d'échappement (5, 6) sont fusionnés en un passage commun pour fournir une sortie de gaz d'échappement commune (8) du dispositif de purification (2), dans lequel ledit second passage de gaz d'échappement (6) est agencé dans la cavité (21) qui est au moins en partie formée par l'enveloppe (13), ladite cavité (21) est séparée du premier passage de gaz d'échappement (5) par un élément de séparation (25) et se présente sous la forme d'une cavité d'une surface de limitation externe de l'unité de purification (12), dans lequel le premier et le second passage de gaz d'échappement (5, 6) ont chacun une entrée de gaz (18, 22) agencée dans une première partie d'extrémité (19) de l'unité de purification (12) et dans lequel chaque passage de gaz d'échappement (5, 6) s'étend de l'entrée de gaz (18, 22) vers la partie de jonction de passages (7) proche de la seconde partie d'extrémité (20) de l'unité de purification (12), chaque dite entrée de gaz (18, 22) étant agencée pour se raccorder à une première et une seconde sortie de gaz respectives (28, 29) d'un dispositif de commutation de passages d'écoulement (3) ayant une entrée de gaz (27) pour se raccorder à un moteur de combustion (1) via une conduite de gaz d'échappement (4), le dispositif de commutation de passages d'écoulement (3) comprenant en outre des moyens de commutation de passages d'écoulement (30, 31, 32, 33, 34, 35, 36, 37) pour ouvrir et fermer la première et la seconde sortie de gaz (28, 29) en sorte que la première sortie de gaz (28) soit ouverte lorsque la seconde sortie de gaz (29) est fermée ou que la seconde sortie de gaz (29) soit ouverte lorsque la première sortie de gaz (28) est fermée,
ledit second passage de gaz d'échappement (6) est disposé à l'intérieur d'une conduite de gaz séparée (24), **caractérisé en ce que** :
ladite conduite de gaz (24) est fixée de manière mobile à l'unité de purification (12) dans une cavité ouverte (21) formée par une cavité de la surface externe de l'enveloppe (13), séparant et isolant ledit passage de gaz d'échappement (6) de son environnement.

2. Dispositif de purification de gaz d'échappement selon la revendication 1, dans lequel la cavité (21) est formée le long d'une partie de bord longitudinale de l'enveloppe (13) entre deux parois adjacentes (15, 16) de l'enveloppe (13) et dans lequel l'élément de séparation (25) est agencé le long de la partie de bord et sépare la cavité (21) du premier passage de gaz d'échappement (5).

3. Dispositif de purification de gaz d'échappement selon la revendication 1 ou 2, dans lequel la partie de jonction de passages (7) est agencée à l'intérieur de l'enveloppe (13).

4. Dispositif de purification de gaz d'échappement selon l'une quelconque des revendications précédentes, dans lequel la conduite de gaz (24) est tubulaire.

5. Dispositif de purification de gaz d'échappement selon l'une quelconque des revendications précédentes, dans lequel chaque passage de gaz d'échappement (5, 6) s'étend longitudinalement sensiblement dans la même direction qu'une conduite longitudinale (L) venant de l'entrée de gaz (18, 22) vers la partie de jonction de passages (7).

6. Dispositif de purification de gaz d'échappement selon l'une quelconque des revendications précédentes, dans lequel au moins une partie d'une paroi latérale (17) qui a une surface en regard du premier passage de gaz d'échappement (5) est pourvue d'un volet (26) qui peut être ouvert pour assurer service et inspection du premier passage de gaz d'échappement (5) et des éléments de purification (9, 10) qui s'y trouvent.

7. Dispositif de purification de gaz d'échappement selon l'une quelconque des revendications précédentes, dans lequel le second passage de gaz d'échappement (6) ne contient pas d'éléments de purification (9, 10).

8. Dispositif de purification de gaz d'échappement selon l'une quelconque des revendications précédentes, dans lequel un absorbeur de sons est agencé à l'intérieur de l'enveloppe (13) en tant que partie ou liaison avec la partie de jonction de passages (7).

9. Système de purification de gaz d'échappement selon l'une quelconque des revendications 1 à 8, dans lequel le système comprend en outre une unité de commande pour la régulation automatique ou manuelle du système de purification de gaz d'échappement.

10. Système de purification de gaz d'échappement selon la revendication 9, dans lequel le système est agencé de sorte que :
- lorsque l'unité de commande détermine que le système de purification d'échappement se situe dans une zone de commande d'émission sur la base d'un signal permettant de déterminer si le système est ou non dans la zone de commande d'émission, les moyens de commutation de passages d'écoulement (30, 31, 32, 33, 34, 35, 36, 37) soient entraînés en sorte que la première sortie de gaz (28) soit ouverte et que la seconde sortie de gaz (29) soit fermée et que,
- lorsque l'unité de commande détermine que le système de purification d'échappement ne se trouve dans une zone de commande d'émission, les moyens de commutation de passages d'écoulement (30, 31, 32, 33, 34, 35, 36, 37) soient entraînés en sorte que la première sortie de gaz (28) soit fermée et la seconde sortie de gaz (29) ouverte.
